# EUROPEAN PATENT SPECIFICATION

(11) **EP 1 640 241 B1**
(45) Date of publication and mention of the grant of the patent: **21.10.2009**
(21) Application number: 04745431.9
(22) Date of filing: 24.05.2004
(51) Int. Cl.: B62D 1/18

(54) **STEERING APPARATUS**
LENKVORRICHTUNG
APPAREIL DE CONDUITE

(30) Priority: 05.06.2003 JP 2003160572; 26.02.2004 JP 2004051250
(43) Date of publication of application: 29.03.2006
(73) Proprietor: NSK Ltd., Tokyo 141-8560 (JP); NSK Steering Systems Co. Ltd, Shinagawa-ku, Tokyo 141-8560 (JP)
(72) Inventor: HIGASHINO, Kiyoharu, Maebashi-shi, Gunma 371-8528 (JP)
(74) Representative: Grünecker, Kinkeldey, Stockmair & Schwanhäusser Anwaltssozietät
(86) International application number: PCT/JP2004/007400
(87) International publication number: WO 2004/108501

(56) References cited:
- EP-A1- 1 627 796
- EP-A2- 1 182 114
- GB-A- 2 298 261
- GB-A- 2 304 866
- JP-A- 8 080 857
- JP-A- 8 230 689
- JP-A- 10 512 826
- JP-A- 62 074 767
- JP-A- 2001 191 927
- JP-A- 2001 347 953
- JP-A- 2002 059 848
- JP-A- 2002 059 850
- JP-A- 2002 087 285

## Description

### TECHNICAL FIELD

The present invention relates to a tilt and telescoping steering apparatus which is capable of adjusting a tilt angle of a steering wheel and its axial position in correspondence with a driving posture of a driver.

Each of the documents EP 1 182 114 A2 and late-filed document EP 1 627 796 discloses a steering apparatus with the features of the preamble of independent claims 1.

### BACKGROUND ART

As a steering apparatus for a vehicle, a tilt and telescoping steering apparatus is known which is capable of adjusting a tilt angle of a steering wheel and adjusting an axial position of the steering wheel in correspondence with a driver's physique and driving posture.

Here, to secure the space in the vicinity of the driver's knees, it is conceivable to dispose component parts of the tilt and telescoping steering apparatus on a side as close to the steering shaft as possible. In connection with this, JP-A-10-512826 discloses a steering apparatus in which a yoke for supporting a steering shaft disposed in an outer column tube

### DISCLOSURE OF THE INVENTION

Incidentally, according to the above-described example, the assembly of parts is effected after stud bolts are respectively threadedly engaged with an integrally shaped yoke from its both sides through a pair of bracket portions. However, although the bracket portions are fixed, the yoke undergoes tilting motion, so that prying occurs between the stud bolt and the bracket portion. Hence, there is a possibility that the stud bolts become loosened over long periods of use. To prevent this, a measure such as bonding the stud bolts become necessary, so that there are problems in that time and trouble are involved in assembling, and that disassembling at the time of repair is not easy.

The present invention has been devised in view of the problems of the conventional art, and its object is to provide a steering apparatus excellent in the assembling efficiency and capable of controlling trouble such as loosening.

The steering apparatus in accordance with a first aspect of the invention is characterized by being a steering apparatus for supporting a steering shaft for mounting a steering wheel thereto, to render the axial displacement of the steering shaft adjustable, comprising:
an inner column;
a pair of bracket portions mounted to a vehicle body and respectively disposed at positions opposing an axis of the steering shaft;
a tension member extending between the pair of bracket portions;
two fixing members for fixing the tension member to the pair of bracket portions;
an imparting member for imparting relative displacement of the pair of bracket portions in interlocked relation to the operation of an operation lever; and
an outer jacket held by the vehicle body by a combination of the tension member, the bracket portions, and the fixing members and having at least pressing portions, whose outer peripheries are respectively brought into contact with the pair of bracket portions by the relative displacement of the bracket portions, between the pair of bracket portions, the outer jacket having an inner peripheral surface for sheathing and holding an outer periphery of the inner column,
wherein the tension member includes a supporting portion disposed between the pair of bracket portions and at least one extending portion extending outwardly from the supporting portion through the bracket portion, and
one of the fixingmembers is attached to extending portion.

The steering apparatus in accordance with a second aspect of the invention is characterized by being a steering apparatus for supporting a steering shaft for mounting a steering wheel thereto, to render the axial displacement of the steering shaft adjustable, comprising:
an inner column;
a pair of bracket portions mounted to a vehicle body and respectively disposed at positions opposing an axis of the steering shaft;
a tension member extending between the pair of bracket portions;
two fixing members for fixing the tension member to the pair of bracket portions;
an imparting member for imparting relative displacement of the pair of bracket portions in interlocked relation to the operation of an operation lever; and
an outer jacket held by the vehicle body by a combination of the tension member, the bracket portions, and the fixing members and having at least pressing portions, whose outer peripheries are respectively brought into contact with the pair of bracket portions by the relative displacement of the bracket portions, between the pair of bracket portions, the outer jacket having an inner peripheral surface for sheathing and holding an outer periphery of the inner column,
wherein the tension member is formed by joining integrally or in a non-threadedly engaged state a supporting portion disposed between the pair of bracket portions and at least one extending portion extending outwardly from the supporting portion through the bracket portion.

### BRIEF DESCRIPTION OF THE DRAWINGS

Fig. 1 is a side elevational view of a tilt and telescoping electrically-operated power steering apparatus in accordance with a first embodiment of the present invention;
Fig. 2 is a cross-sectional view, taken along line II-II in the direction of arrows, of the steering apparatus shown in Fig. 1 in an assembled state;
Fig. 3 is a cross-sectional view, taken along line III-III in the direction of arrows, of the steering apparatus shown in Fig. 1;
Fig. 4(a) and 4(b) are a front elevational view and a side elevational view, respectively, of a part of a tension member;
Fig. 5 is a diagram explaining the process of assembling the steering apparatus in accordance with this embodiment;
Fig. 6 is a diagram illustrating a part of the tension member in accordance with a second embodiment of the present invention;
Fig. 7 is a diagram of the steering apparatus in accordance with another embodiment and is similar to Fig. 3;
Fig. 8 is a diagram of the steering apparatus in accordance with still another embodiment and is similar to Fig. 2;
Fig. 9 is an assembly diagram of the steering apparatus in accordance with a further embodiment and is similar to Fig. 5; and
Fig. 10 is a diagramof the steering apparatus in accordance with a still further embodiment and is similar to Fig. 2.

It should be noted that, in the drawings, reference numerals 11 and 111 denotes inner columns; 12 denotes a mounting bracket; 13, 313, and 413 denote tension members; 16 denotes a fixing member; 20 and 220 denote operation members; 21 and 121 denote outer jackets; and reference character S denotes a steering shaft.

### BEST MODE FOR CARRYING OUT THE INVENTION

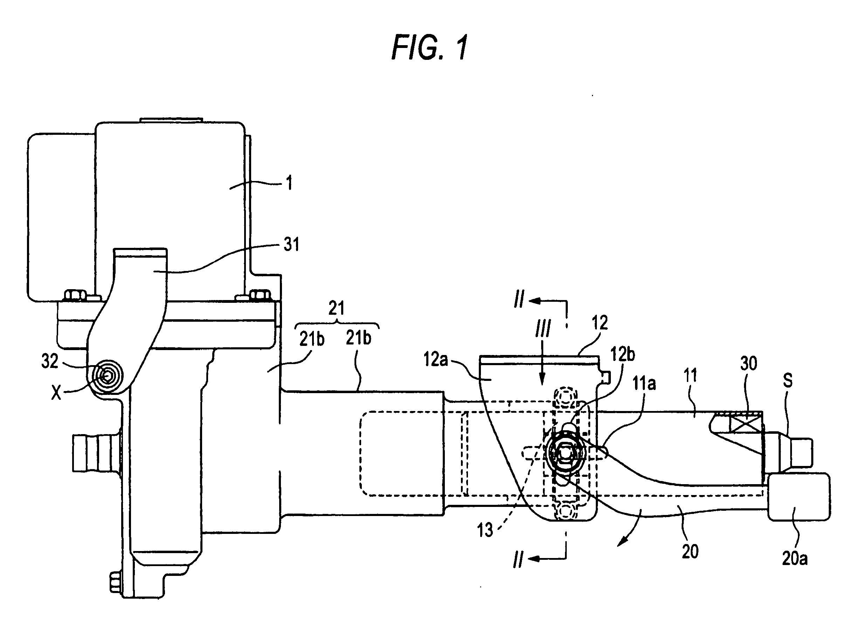

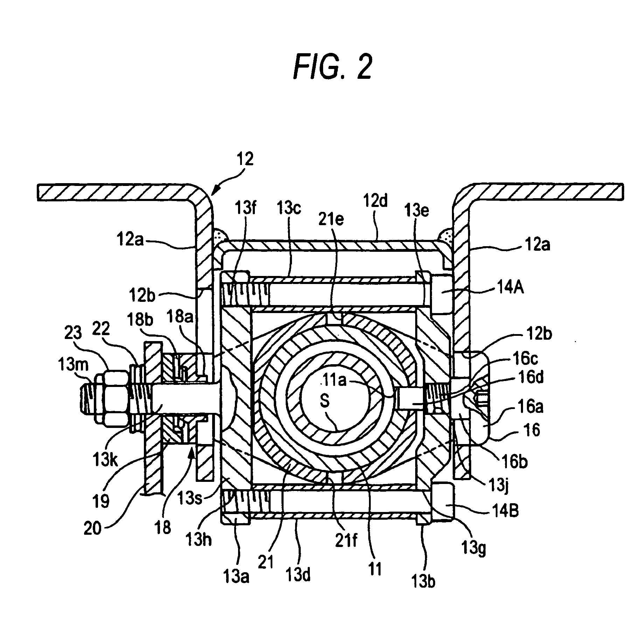

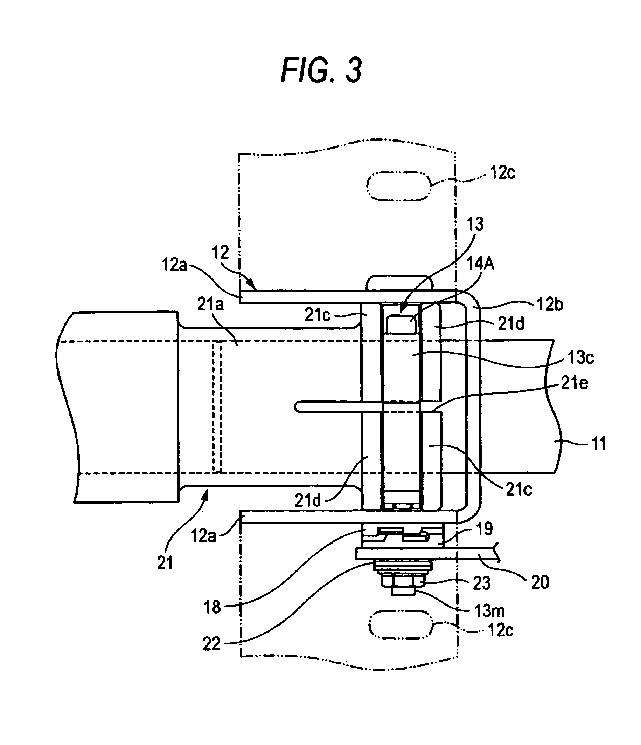

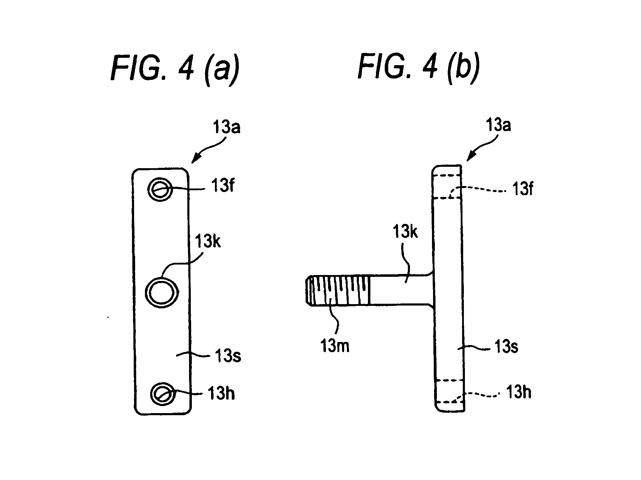

Hereafter, referring to the drawings, a description will be given of a tilt and telescoping electrically-operated power steering apparatus in accordance with an embodiment of the present invention. Fig. 1 is a side elevational view of the tilt and telescoping electrically-operated power steering apparatus in accordance with a first embodiment of the present invention. Fig. 2 is a cross-sectional view, taken along line II-II in the direction of arrows, of the steering apparatus shown in Fig. 1 in an assembled state . Fig. 3 is a cross-sectional view, taken along line III-III in the direction of arrows, of the steering apparatus shown in Fig. 1. Figs. 4(a) and 4(b) are a front elevational view and a side elevational view, respectively, of a part of a tension member.

In Fig. 2, a mounting bracket 12 has a pair of vehicle body mounting holes 12c (Fig. 3) for mounting to an unillustrated vehicle body by bolts, and has a pair of plate-shaped bracket portions 12a extending in parallel to each other and extending vertically (vertically in parallel to each other). The thicknesses of the bracket portions 12a are identical, and their shapes are bilaterally symmetrical about a vertical line between them. A tilt groove 12b, which forms a part of a circular arc about a pivotal point x of an outer jacket 21, is formed in each of the bracket portions 12a.

A tension member 13 is disposed between the bracket portions 12a. The tension member 13 has as its component parts a substantially T-shaped left half portion 13a, an elongated plate-shaped right half portion 13b, and a pair of tubes 13c and 13d for connecting upper ends and lower ends of the left half portion 13a and a right half portion 13b as viewed in Fig. 2. As shown in Figs. 4 (a) and 4 (b), the left half portion 13a is formed integrally by an elongated plate-shaped supporting portion 13s as well as a shank portion 13k which is an extending portion extending from a center thereof.

In Fig. 2, upper end sides of the left half portion 13a and the right half portion 13b are connected by a bolt 14A which is inserted through a hole 13e formed in the right half portion 13b and the tube 13c and threadedly engaged in a threaded hole 13f of the left half portion 13a. Lower end sides of the left half portion 13a and the right half portion 13b are connected by a bolt 14B which is inserted through a hole 13g formed in the right half portion 13b and the tube 13d and threadedly engaged in a threaded hole 13h of the left half portion 13a. The tension member 13 is installed in such a manner as to clamp the outer periphery of an end portion of the outer jacket 21. Accordingly, the tension member 13 can be split into the left half portion 13a and the right half portion 13b. For this reason, the tension member 13 excels in the assembling efficiency at the time of mounting on an actual vehicle, and assumes a circumferentially continuous annular shape in the state of being fixed by the bolts 14A and 14B, so that the rigidity becomes high. Standard items can be used as the bolts 14A and 14B, and the tubes 13c and 13d can be fabricated by merely cutting a circular pipe into a predetermined length, so that lower cost can be attained. It should be noted that the tubes 13c and 13d may be formed by convoluting and welding a plate material. In addition, if a circumferentially continuous integrally molded product or a product formed integrally by welding or the like is used as the tension member 13 by assembling flanges 21c and 21d of the outer jacket 21 as separate parts, the assembly thereof is made possible.

In Fig. 1, the outer jacket 21 is integrally formed by a hollow, cylindrical portion 21a and a gear box 21b. An unillustrated reduction gear mechanism, which consists of a worm and a worm wheel connected to a rotating shaft of an electric motor unit 1, is provided in the gear box 21b. The assisting steering force of the electric motor unit 1 is adapted to be outputted to a steering shaft S through such a reductionmechanism.

The outer jacket 21 is installed on the unillustrated vehicle body through a pair of lower vehicle body brackets 31 on a left end side in Fig. 1. The fixation of the outer jacket 21 and the lower vehicle body brackets 31 can be effected by inserting bolts 32 respectively into through holes (not shown) formed therein and by tightening them with nuts (not shown). It should be noted that the axis of the bolt 32 serves as the pivotal point x.

As shown in Fig. 3, the outer jacket 21 has the hollow cylindrical portion 21a as well as the pair of plate-shaped flanges 21c and 21d formed on the outer periphery of the end portion of the hollow cylindrical portion 21a in such a manner as to be spaced apart from each other in the axial direction of the steering shaft S. The hollow cylindrical portion 21a envelops and holds an inner column 11, and is supported pivotally (vertically in Fig. 2) with respect to the unillustrated vehicle body by an unillustrated pivotal portion (x in Fig. 1). The tension member 13 is disposed between the flanges 21c and 21d serving as pressing portions. It should be noted that, as shown in Fig. 1, slits 21e and 21f (shown in a more exaggerated form than the actual case) are respectively formed in uppermost and lowermost portions of the hollow cylindrical portion 21a in such a manner as to extend in the axial direction from its end.

The steering shaft S is inserted in the cylindrical inner column 11 enveloped in the outer jacket 21, and is supported so as to be rotatable with respect to the inner column 11 by means of a bearing 30 (Fig. 1). It should be noted that an elongated hole 11a serving as a telescoping stopper is formed on each side of the inner column 11 in parallel with the axis of the steering shaft S.

The tilt groove 12b, which forms a part of the circular arc about the pivotal point x, is formed in each of the bracket portions 12a. Each tilt groove 12b is located at a position offset in the axial direction of the inner column 11 with respect to the vehicle body mounting hole 12c (Fig. 3) in the mounting bracket 12. In Fig. 2, the shank portion 13k of the left half portion 13a is inserted in the left-hand bracket portion 12a in such a manner as to be passed through the tilt groove 12b, while a fixing member 16 is inserted in the right-hand bracket portion 12a.

The fixing member 16 has a disk-shaped head portion 16a having a tool engaging hole whose diameter is larger than the width of the right-hand tilt groove 12b as viewed in Fig. 2; a tubular tilt guide portion 16b which is guided by being engaged in the tilt groove 12b; an externally threaded portion 16c which is secured by being threadedly engaged in a threaded hole 13j formed in the body portion 13a of the tension member 13; and a stopper portion 16d which is engaged in the elongated hole 11a of the inner column 11.

In contrast, the shank portion 13k of the left half portion 13 of the tension member 13 has a threaded portion 13m formed on its tip side. The following are fitted over the shank portion 13k: a fixed cam 18 having a tilt guide portion 18a with such a substantially oval-shaped cross section as to engage with the width of the tilt groove 12b and a fixed cam portion 18b of a larger diameter than the same; a movable cam 19 having a cam surface for engaging the fixed cam portion 18b; an operation lever 20 which rotates integrally with the movable cam 19; and athrustbearing (or maybe a rolling bearing or a sliding bearing) 22. These members are fixed by a nut 23 which is secured by being threadedly engaged with the threaded portion 13m. It should be noted that the fixed cam 18 and the movable cam 19 constitute imparting members in the claims, the nut 23 and the fixing member 16 constitute fixing members in claim 1, and the nut 23 and the fixing member 16 constitute fixing members in claim 4.

As can be understood from Fig. 1, at the time of completion of the tilt position adjustment, the operation lever 20 extends from the shank portion 13k toward the upper side (right side in Fig. 1), and its grip portion 20a is adapted to be located in the vicinity of the unillustrated steering wheel.

Next, a description will be given of the adjustment operation of the steering apparatus in accordance with this embodiment. If the operator rotates the operation lever 20 in the tightening direction (in the direction of the arrow in Fig. 1), the projecting portion of the fixed cam portion 18b of the fixed cam 18 and the projecting portion of the movable cam 19 are engaged with each other and produce forces in directions in which they are spaced apart from each other. At this time, the left-hand bracket portion 12a in Fig. 2, which has been pressed by the fixed cam 18, is displaced rightward. Meanwhile, the shank portion 13k pressed leftward by the movable cam 19 displaces the supporting portion 13s of the tension member 13 leftward. The fixed member 16 also moves leftward correspondingly. The tension member 13 presses side portions of the flanges 21c and 21d of the outer jacket 21 against the bracket portions 12a and imparts appropriate pressing forces thereto. As a result, the outer jacket 21 is fixed to the bracket portions 12a, thereby preventing its displacement in the tilting direction.

On the other hand, as the left-hand bracket portion 12a as viewed in Fig. 2, which has been pressed by the fixed cam 18, is displaced rightward on the basis of the rotation of the operation lever 20 in the tightening direction, the left-hand bracket portion 12a abuts against left half portions of the flanges 21c and 21d and similarly displaces them rightward. Further, the force imparted to the tension member 13 is transmitted to the fixing member 16 on the opposite side, and the right-hand bracket portion 12a as viewed in Fig. 2, which has been pressed thereby, is displaced leftward. When the right-hand bracket portion 12a is displaced leftward, the right-hand bracket portion 12a abuts against right half portions of the flanges 21c and 21d and similarly displaces them leftward, thereby imparting a pressing force to the outer peripheral surface of the outer jacket 21. Since the outer jacket 21 is pressed from both sides, the slits 21e and 21f are deformed in such a manner as to be closed. Therefore, the inside diameter of the outer jacket 21 is reduced, making it possible to hold the inner column 11 with an appropriate force.

According to this embodiment, since the shapes and thicknesses of both bracket portions 12a are substantially equal, i.e., their moduli of bending elasticity (hence, rigidity) are substantially equal, the bracket portions 12a are subjected to forces in directions in which they approach each other, and are displaced with substantially equal amounts by the tightening operation of the operation lever 20. Therefore, the inner column 11 is subjected to pressing forces from both left and right sides, as viewed in Fig. 1, by the flanges 21c and 21d, and the inner column 11 is fixed such that its center is aligned with a position for bisecting the distance between the bracket portions 12a. As a result, it becomes possible to suppress the misalignment of the center of the steering shaft S, while preventing the displacement in the telescoping direction.

Meanwhile, when the operator rotates the operation lever 20 in the loosening direction, in Fig. 2, the projections of the fixed cam 18 and the movable cam 19 are disengaged from each other, so that the two members become capable of approaching each other. Therefore, both bracket portions 12a are moved away from each other, and the outer jacket 21 is thereby set in a free state with respect to bothbracket portions 12a. As a result, the tilt guide portion 16b of the fixing member 16 and the tilt guide portion 18a of the fixed cam 18 can be displaced while being guided along the tilt grooves 12b of the bracket portions 12a. Further, since the axial displacement of the inner column 11 is made possible (the inner column 11 becomes axially displaceable) due to a decline in the tightening force of the outer jacket 21, it is possible to arbitrarilyperformadjustment in the tilting direction and the telescoping direction.

According to this embodiment, since the tension member 13 is provided on the radially outer side of the outer jacket 21 and the inner column 11, the structure becomes compact and excels in the assembling efficiency.

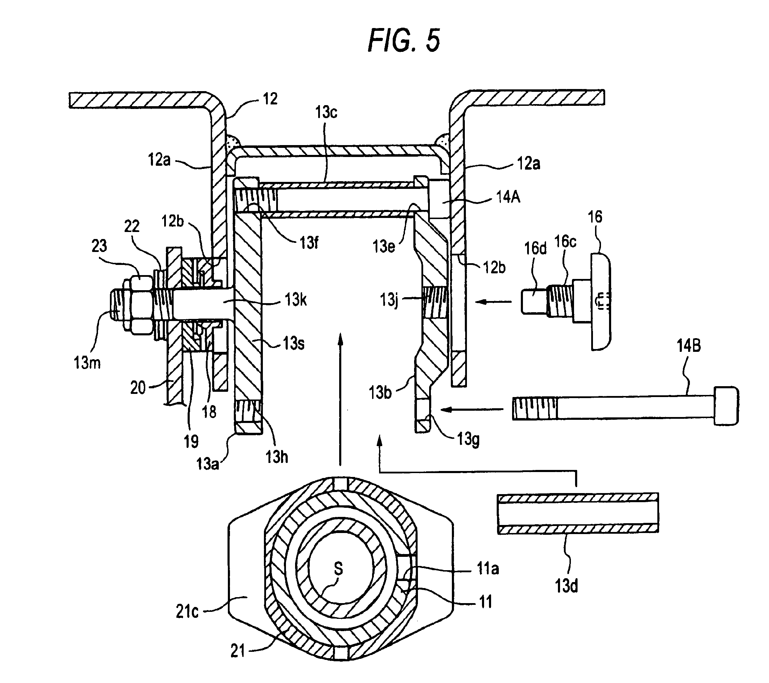

Next, a description will be given of the process of assembling the steering apparatus in accordance with this embodiment. Fig. 5 is a cross-sectional view similar to Fig. 2 but shows the steering apparatus in accordance with this embodiment in a disassembled state. In Fig. 5, the shank portion 13k of the left half portion 13a of the tension member 13 is first inserted in the tilt groove 12b of the left-hand bracket portion 12a. The fixed cam 18, the movable cam 19, the operation lever 20, and the thrust bearing 22 are then assembled around it, and the nut 23 is threadedly engaged in the threaded portion 13m, thereby fixing the shank portion 13k.

Even in the thus-assembled state, as is apparent from Fig. 1, as the left half portion 13a is rotated about the shank portion 13k, the threaded hole 13f is exposed from the bracket portion 12a. Accordingly, the bolt 14A inserted in the hole 13e of the right half portion 13b and the tube 13c is threadedly engaged in the threaded hole 13f, and is tightened after the phases of the left half portion 13a and the right half portion 13b are adjusted. In consequence, it is possible to obtain the tension member 13 in a substantially U-shaped semi-assembled state, so that this tension member 13 is held in the position such as shown in Fig. 5.

In such a state, since the tension member 13 is in a downwardly open state, the outer jacket 21 enveloping the steering shaft S and the inner column 11 is built in therethrough. Then, the bolt 14B inserted in the hole 13g of the right half portion 13b and the tube 13d is threadedly engaged in the threaded hole 13h exposed from a lower end of the bracket portion 12a and is tightened, thereby obtaining the tension member 13. Subsequently, the stopper portion 16d of the fixing member 16 inserted in the tilt groove 12b of the right-hand bracket portion 12a is engaged in the elongated hole 11a of the inner column 11, and the threaded portion 16c is threadedly engaged in the threaded hole 13j of the right half portion 13b. The steering apparatus shown in Fig. 2 is thereby assembled.

According to this embodiment, as the supporting portion 13s and the shank portion 13k are integrated, even in a case where prying or the like with respect to the bracket portion 12a has occurred, there is no possibility of the occurrence of the loosening or the like of the bolt, which has been a problem in the conventional construction. Hence, it is possible to ensure higher reliability. It should be noted that it is possible to adopt a similar construction for the right half portion 13b as well.

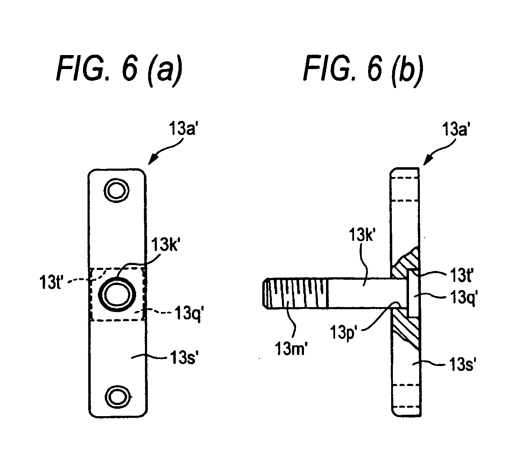

Figs. 6(a) and 6(b) are diagrams similar to Figs. 4(a) and 4(b) but show a part of the tension member in accordance with a second embodiment of the present invention. In this embodiment, a left half portion 13a' of the tension member is formed by joining a supporting portion 13s' and a shank portion 13k', which are separate parts, in a non-threadedly engaged state. More specifically, a groove 13t' is formed in the center of an inner side surface (right side surface in Fig. 6B) of the supporting portion 13a', and a hole 13' is formed in the bottom of the groove 13t' . The shank portion 13k' has a square end 13q' of a shape complementary to the groove 13t' provided at its end portion on the opposite side to a threaded portion 13m' . As the shank portion 13k' is inserted in the hole 13p' , and the square end 13q' is engaged in the groove 13t' , the left half portion 13a' is formed.

It should be noted that the engagement between the square end 13q' and the groove 13t' is sufficient if the shank portion 13k' is maintained in a nonrotatable state with respect to the supporting portion 13s' in the assembled state. Accordingly, the engagement is not limited to the combination of the square end and the groove, and may be a combination of noncircularly shaped counterparts. In addition, even a tubularly shaped part is sufficient if a measure for preventing its coming off and rotation is provided by such as welding. It should be noted that a similar structure may be provided for the right half portion 13b as well.

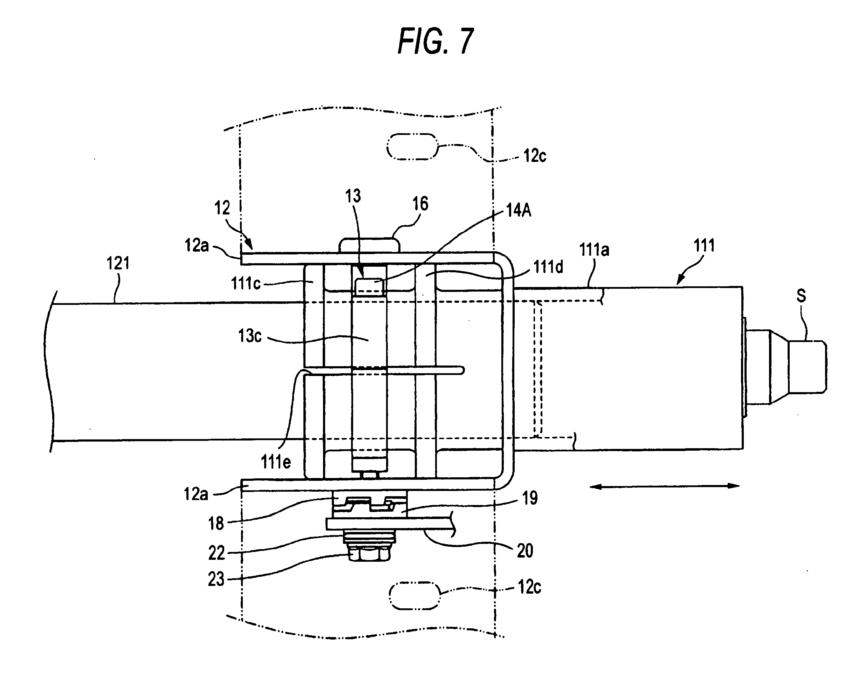

Fig. 7 is a diagram of the steering apparatus in accordance with another embodiment and is similar to Fig. 3. It should be noted that a steering wheel mounting portion is located on the right-hand side as viewed in Fig. 7. This embodiment differs from the embodiment shown in Fig. 3 mainly in the shapes of an outer jacket 111 and an inner column 121. To give a more specific description, in this embodiment, the outer jacket 111 disposed on the unillustrated steering wheel side has a hollow cylindrical portion 111a and a pair of plate-shaped flanges 111c and 111d formed on the outer periphery of the end portion of the hollow cylindrical portion 111a in such a manner as to be spaced apart from each other in the axial direction of the steering shaft S. The hollow cylindrical portion 111a envelops and holds the inner column 121 disposed on the unillustrated steering mechanism side. The tension member 13 is disposed between the flanges 111c and 111d serving as the pressing portions, and its construction is similar to those of the above-described embodiments. A slit 111e (which is also present on the opposite side in Fig. 7) is formed in each of the uppermost and lowermost portions (as viewed in Fig. 2) of the hollow cylindrical portion 111a in such a manner as to extend in the axial direction from its end.

In addition, a groove (not shown) extending in the tilting direction is formed in each of the pair of bracket portions 12a of the bracket 12, and the fixing member 16 and the like are engaged therewith. The same reference numerals will be used for those arrangements which are common to the above-described embodiments, and a description thereof will be omitted.

In this embodiment as well, both bracket portions 12a can be moved closer to or away from each other by rotating the operation lever 20. When both bracket portions 12a are moved away from each other, the outer jacket 111 becomes displaceable relative to the bracket 12, so that the tilting operation can be effected along the unillustrated tilt grooves. Meanwhile, when both bracket portions 12a are moved away from each other, the outer jacket 111 becomes displaceable relative to the inner column 121, so that the telescoping operation can be effected in the form of being guided along the inner column 121. It should be noted that in this embodiment the interval between the flanges 111c and 111d is set to be wide so as to prevent the tension member 13 from interfering with the outer jacket 111 and displacing its displacement in the telescoping direction. Namely, the arrangement provided is such that when the telescoping length has become maximum, the tension member 13 and the flange 111c abut against each other, whereas when the telescoping length has become minimum, the tension member 13 and the flange 111d abut against each other. In addition, there are cases where the outer jacket 111 is pushed with a strong force in a secondary collision or the like. However, both of the mounting holes 12c of the bracket 12 may be extended in the axial direction of the steering shaft S so as to form notches, and releasing capsules or the like adapted to come off upon being subjected to an impact may be interposed thereat.

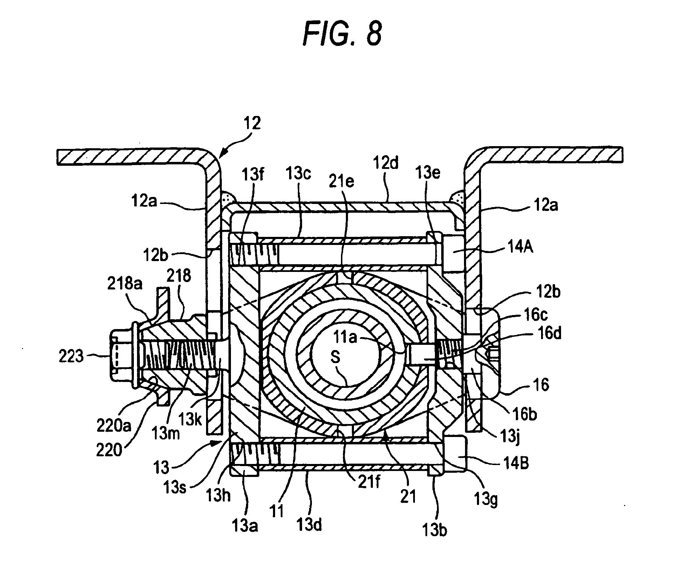

Fig. 8 is a diagram of the steering apparatus in accordance with still another embodiment and is similar to Fig. 2. This embodiment differs from the embodiment shown in Fig. 2 in that a nut member 218 is provided instead of the fixed cam 18 and the movable cam 19. More specifically, the nut member 218 is fitted so as to be threadedly engaged with the externally threaded portion 13m formed on the shank portion 13k of the left half portion 13a of the tension member 13. A tapered surface 218a is formed on an outer end (left end in Fig. 8) of the nut member 218. As a tapered portion 220a of an operation lever 220 is engaged with such a tapered surface 218a, and a bolt 223 is threadedly secured to the nut member 218, the operation lever 220 is attached to the nut member 218 so as to be relatively unrotatable. The same reference numerals will be used for those arrangements which are common to the above-described embodiments, and a description thereof will be omitted.

In this embodiment, as the operation lever 220 is rotated, the nut member 218 is threadedlymoved relative to the externally threaded portion 13m of the tension member 13. Due to such operation, the interval between the nut member 218 and the tension member 13 changes, thereby making it possible to move both bracket portions 12a closer to or away from each other. In consequence, the fixation or relative displacement of the inner column 111 and the outer jacket 121 is made possible. It should be noted that the nut member 218 and the fixing member 16 constitute fixing members stated in the claims.

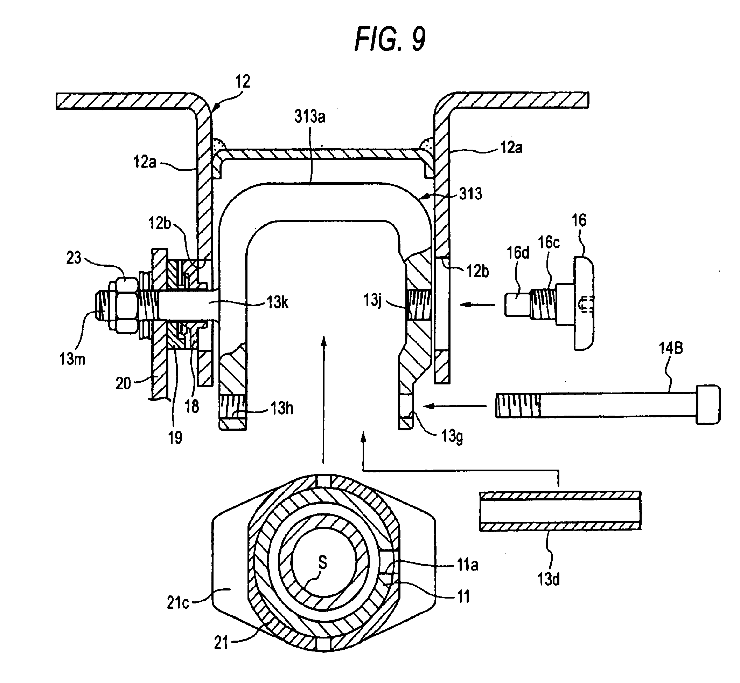

Fig. 9 is an assembly diagram of the steering apparatus in accordance with a further embodiment and is similar to Fig. 5. This embodiment differs from the embodiment shown in Fig. 5 in the tension member. More specifically, a tension member 313 has as its component parts an inverse U-shaped main body 313a with a horizontal bar connected to the center of its left-hand surface, as viewed in the drawing, as well as the tube 13d for connecting the pair of lower ends of the main body 313a. The tube 13d is connected to the main body 313a by the bolt 14B. In other words, the tension member 313 has a shape in which the left half portion and the right half portion are integrally connected at their upper ends with respect to the embodiment shown in Fig. 5. The same reference numerals will be used for those arrangements which are common to the above-described embodiments, and a description thereof will be omitted. According to such a construction, the number of component parts can be reduced, and the number of steps of assembly can also be decreased.

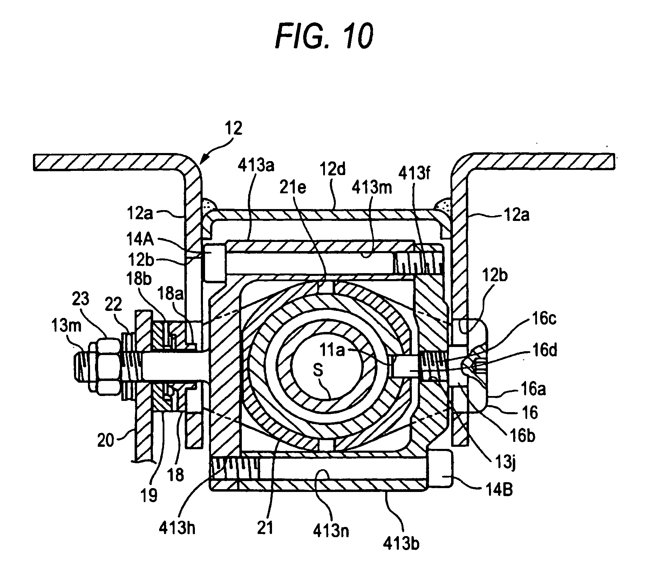

Fig. 10 is a diagramof the steering apparatus in accordance with a still further embodiment and is similar to Fig. 2. In contrast to the embodiment shown in Fig. 2, this embodiment has a shape in which one half portion is combined with one tube. More specifically, a tension member 413 has as its component parts an inverse L-shaped left half portion 413a and an L-shaped right half portion 413b. As shown in Fig. 10, the left half portion 413a has the shank portion 13k which is an extending portion which extends from the center of the left-hand surface as viewed in the drawing. In this embodiment, horizontally extending through holes 413m and 413n are respectively formed in the left half portion 413a and the right half portion 413b instead of disusing the tubes. The bolts 14A and 14B are passed through these holes 413m and 413n and are threadedly engaged inmating threaded holes 413f and 413h, so as to assume an integral shape. The same reference numerals will be used for those arrangements which are common to the above-described embodiments, and a description thereof will be omitted. According to such a construction as well, the number of component parts can be reduced, and the number of steps of assembly can also be decreased.

As described above, although a detailed description has been given of the present invention with reference to the embodiments, the present invention should not be construed as limited to the above-described embodiments, and it goes without saying that changes and improvements may be made, as required, without departing from the gist thereof. For example, a measure for preventing the loosening of the nut 23 may be adopted by caulking the nut 23 after its fastening or by providing a resin ring projecting radially inwardly of the internal thread of the nut 23 so as to be threadedly engaged with the threaded portion 13m of the shank portion 13k, or by applying a hardening resin to threadedly engaging portions of the nut 23 and the shank portion 13k. Alternatively, instead of the nut 23 which is a fixing member, a press-fit ring may be press fit onto the shank portion 13k, or a snap ring may be engaged with the shaft portion 13k by forming a circumferential groove therein. Furthermore, the tension member 13 may not necessarily be so constructed as to be splittable.

While the present invention has been described in detail with reference to specific embodiments thereof, it will be apparent to those skilled in the art that various changes and modifications may be made without departing from the spirit and scope of the present invention.

This application is based on Japanese Patent Application filed on February 26, 2004 (Japanese Patent Application No. 2003-160572) and Japanese Patent Application filed on February 26, 2004 (Japanese Patent Application No. 2004-51250)

### INDUSTRIAL APPLICABILITY

In the steering apparatus of a first aspect of the present invention, the tension member includes a supporting portion disposed between the pair of bracket portions and at least one extending portion extending outwardly from the supporting portion through the bracket portion, and one of the fixingmembers is attached to extending portion. Therefore, even in a case where prying or the like has occurredbetween the bracket portion and the supporting portion, there is no possibility of the occurrence of the loosening or the like of the bolt, which has been a problem in the conventional construction.

Furthermore, the relative displacement of the imparting member is preferably transmitted to the bracket portions by fixing member attached to the extending member and by the extending member.

Furthermore, the fixing member attached to the extending portion is preferably a nut, but a press-fit ring or a snap ring may be used.

In the steering apparatus of a second aspect of the present invention, the tension member is formed by joining integrally or in a non-threadedly engaged state a supporting portion disposed between the pair of bracket portions and at least one extending portion extending outwardly from the supporting portion through the bracket portion. Therefore, even in a case where prying or the like has occurred with respect to the bracket portion, there is no possibility of the occurrence of the loosening or the like of the bolt, which has been the problem in the conventional construction.

Cross sections of fitting portions of the supporting portion and the extending portion are preferably noncircular, since the relative rotation is suppressed.

Furthermore, the tension member is preferably arranged to be splittable, since the assembling efficiency with respect to the bracket portions improves.

Furthermore, if the tension member is disposed radially outwardly of the inner column, the outside diameter of the inner column can be reduced, so that it is possible to obtain a more compact construction. In addition, in the case of the present invention, it suffices if only the clearance between the outer jacket and the inner column is controlled, so that it is possible to save time and trouble involved at the time of manufacture.

It should be noted that according to the technique disclosed in JP-T-10-512826, an elongated hole for the passage of a yoke needs to be provided in an inner column tube (corresponding to the inner column of the present invention). In this case, however, since a fastening load for fixation is imparted to the inner column tube, the fastening rigidity of the inner column tube becomes low due to the presence of such an elongated hole, and the fastening and holding force becomes also low. For this reason, it becomes necessary to adopt a measure for improving the rigidity by such as increasing the wall thickness of the inner column tube. In addition, if the diameter of the inner column tube is enlarged, it may be possible to insert the yoke in an inclined manner into the interior of inner column tube from its end portion. However, since the diameter of the inner column tube becomes large, it is difficult to say that this construction is realistic if consideration is given to the fact that it is vehicle-mounted. Furthermore, the steering shaft cannot be inserted unless the yoke is rotated 90° after it is inserted in the inner column tube, so that it is estimated that the assembly is difficult. Namely, it can be said that the technique of JP-T-10-512826 in terms of its object is directed to a steering apparatus for which telescoping adjustment is not taken into consideration. In contrast, according to the present invention, as the tension member is disposed on the outer side of the inner column, the working of such an elongated hole is unnecessary, so that the above-described problem can be obviated. It should be noted that the provision of an elongated hole for the telescoping stopper is arbitrary.

Furthermore, according to the present invention, the pair of bracket portions approach each other and the distance therebetween decreases owing to the displacement imparted by the imparting members, and the outer jacket is thereby held between the tensionmember and the bracket portions. In addition, the displaced bracket portions impart pressing forces to the inner column through the pressing portions of the outer jacket, and the inner column is thereby held by the bracket portions, which is connected to the vehicle body, through the outer jacket. Therefore, the steering shaft can be fixed in the telescoping direction. Further, since the pair of bracket portions are connected to the tension member, if both bracket portions are shaped substantially symmetrically with the steering shaft placed therebetween, the amounts of displacement of the respective bracket portions become equal. Therefore, the center position of the inner column can be maintained at a substantially fixed position, so that the misalignment of the steering shaft can be effectively suppressed.

Furthermore, it is preferable if the extending portion is made the fixing member.

Furthermore, it is preferable if the tension member is disposed radially outwardly of the inner column.

Furthermore, if the tension member is disposed radially outwardly of the outer jacket, it is possible to provide a more compact structure.

Furthermore, if the tension member is circumferentially continuous in the assembled state, the tension member is provided with higher rigidity.

## Claims

1. A steering apparatus for supporting a steering shaft (S) for mounting a steering wheel thereto, to render the axial displacement of the steering shaft (S) adjustable, comprising:
an inner column (11);
a pair of bracket portions (12a), mounted to a vehicle body and respectively disposed at positions opposing an axis of the steering shaft (S);
a tension member (13) extending between the pair of bracket portions(12a);
two fixing members (16, 23) for fixing the tension member (13) to the pair of the bracket portions (12a);
an imparting member (18) for imparting relative displacement of the pair of bracket portions (12a) in interlocked relation to the operation of an operation lever(20); and
an outer jacket (21) held to the vehicle body by a combination of the tension member (13), the bracket portions (12a) and the fixing members (16, 23), the outer jacket (21) having at least pressing portions (21 c, 21 d), whose outer peripheries are respectively brought into contact with the pair of bracket portions (12a) by the relative displacement of the bracket portions (12a), between the pair of bracket portions (12a) , the outer jacket (21) having an inner peripheral surface for sheathing and holding an outer periphery of the inner column (11), wherein
the tension member (13) is disposed radially outwardly of the outer jacket (21) and includes a supporting portion (13s) disposed between the pair of bracket portions (12a) and at least one extending portion (13k, 13m) extending outwardly from the supporting portion (13s) through the bracket portion (12a),
one of the fixing members (23) is attached to the extending portion (13m), the other of the fixing member (16) has a male screw portion (16c), and
the relative displacement of the imparting member (18) is transmitted to the bracket portions (12a) by the one of the fixing member (23) attached to the extending portion (13m) and by the extending portion (13m);
**characterized in**
**that** the tension member (13) and the outer jacket (21) are separated parts, and that the tension member (13) is splittable into two portions (13a, 13b), wherein one of the split portion (13b) has a screw hole (13j) which screw engages with the male screw portion (16c) of the other of the fixing member (16).

2. The steering apparatus according to claim 1, **characterized in that** the fixing member (23) attached to the extending portion is a nut (23).

3. The steering apparatus according to claim 1, **characterized in that** the tension member (13) is circumferentially continuous in an assembled state.

4. The steering apparatus according to any of the preceding claims, **characterized in that** the tension member (13) is formed by joining integrally or in a non-threadedly engaged state with the supporting portion (13s) disposed between the pair of bracket portions (12a).

5. The steering apparatus according to claim4 **characterized in that** cross -sections of fitting portions of the supporting portion (13s) and the extending portion (13m) are noncircular.

## Patentansprüche

1. Lenkvorrichtung zum Unterstützen einer Lenkwelle (S) zum Befestigen eines Lenkrades daran, um die axiale Verschiebung der Lenkwelle (S) einstellbar zu ermöglichen, umfassend:
eine innere Säule (11);
ein Paar Halterungsabschnitte (12a), die an einem Fahrzeugaufbau befestigt und
an Positionen angeordnet sind, die einer Achse der Lenkwelle (S) gegenüberliegen;
ein Spannelement (13), das sich zwischen dem Paar Halterungsabschnitte (12a) erstreckt;
zwei Befestigungselemente (16, 23) zum Befestigen des Spannelementes (13) an dem Halterungsabschnittspaar (12a);
ein Übertragungselement (18) zum Übertragen einer relativen Verschiebung des Halterungsabschnittpaares (12a) im verriegelten Zustand an den Gang eines Bedienungshebels (20); und
eine äußere Umhüllung (21), die durch eine Kombination des Spannelementes (13), des Halterungsabschnittspaares (12a) und den Befestigungselementen (16, 23) an dem Fahrzeugaufbau gehalten ist, wobei die äußere Umhüllung (21) wenigstens Pressabschnitte (21 c, 21 d) aufweist, deren äußeren Peripherien entsprechend in Berührung mit dem Halterungsabschnittspaar (12a) durch die relative Verschiebung der Halterungsabschnitte (12a) gebracht sind, wobei die äußere Umhüllung (21) zwischen dem Halterungsabschnittspaar (12a) eine innere Umfangsfläche zum Umhüllen und Halten einer äußeren Peripherie der inneren Säule (11) aufweist, wobei
das Spannelement (13) radial außerhalb der äußeren Umhüllung (21) angeordnet ist und einen Halteabschnitt (13s), der zwischen dem Halterungsabschnittpaar (12a) angeordnet ist, und wenigstens einen Verlängerungsabschnitt (13k, 13m) aufweist, der sich außerhalb des Halteabschnitts (13s) durch die Halterungsabschnitte (12a) erstreckt,
einer der Befestigungselemente (23) an dem Verlängerungsabschnitt (13m) angebracht ist, der andere der Befestigungselemente (16) ein Außengewindeabschnitt (16c) aufweist, und
die relative Verschiebung des Übertragungselementes (18) an die Halterungsabschnitte (12a) durch das eine Befestigungsabschnitt (23), das an dem Verlängerungsabschnitt (13m) angebracht ist, und durch den Verlängerungsabschnitt (13m) weitergegeben wird;
**dadurch gekennzeichnet**
**dass** das Spannelement (13) und die äußere Umhüllung (21) separate Teile sind, und
**dass** das Spannelement (13) in zwei Abschnitte (13a, 13b) teilbar ist, wobei einer der Teilabschnitte (13b) ein Schraubenloch (13j) aufweist, welches in Schraubeneingriff mit dem Außengewinde des anderen Befestigungselementes (16) kommt.

2. Lenkvorrichtung nach Anspruch 1, **dadurch gekennzeichnet, dass** das an dem Verlängerungsabschnitt angebrachte Befestigungselement (23) eine Mutter (23) ist.

3. Lenkvorrichtung nach Anspruch 1, **dadurch gekennzeichnet, dass** das Spannelement (13) in einem zusammengesetzten Zustand umfänglich fortlaufend ist.

4. Lenkvorrichtung nach einem der vorhergehenden Ansprüche, **dadurch gekennzeichnet, dass** das Spannelement (13) durch integrales Fügen oder in einem nicht Gewindeeingriff stehenden Zustand mit dem zwischen dem Halterungsabschnittspaar (12a) angeordneten Halteabschnitt (13s) ausgebildet ist.

5. Lenkvorrichtung nach Anspruch 4, **dadurch gekennzeichnet, dass** Querschnitte von Halterungsabschnitten des Halteabschnitts (13s) und des Verlängerungsabschnittes (13m) unrund sind.

## Revendications

1. Dispositif de conduite pour supporter un arbre de direction (S) pour monter un volant de direction dessus, pour rendre le déplacement axial de l'arbre de direction (S) réglable, comprenant :
une colonne intérieure (11) ;
une paire de parties de support (12a), montées sur une carrosserie de véhicule et respectivement disposées en des positions opposées à un axe de l'arbre de direction (S) ;
un élément de tension (13) s'étendant entre la paire de parties de support (12a) ;
deux éléments de fixation (16, 23) pour fixer l'élément de tension (13) sur la paire de parties de support (12a) ;
un élément d'ajustement (18) pour ajuster un déplacement relatif de la paire de parties de support (12a) en relation bloquée avec l'actionnement d'un levier d'actionnement (20) ; et
une chemise extérieure (21) maintenue sur la carrosserie de véhicule par une combinaison de l'élément de tension (13), des parties de support (12a) et des éléments de fixation (16, 23), la chemise extérieure (21) ayant au moins des parties de pression (21c, 21d), dont les périphéries extérieures sont respectivement amenées en contact avec la paire de parties de support (12a) par le déplacement relatif des parties de support (12a), entre la paire de parties de support (12a), la chemise extérieure (21) ayant une surface périphérique intérieure pour gainer et maintenir une périphérie extérieure de la colonne intérieure (11), dans lequel l'élément de tension (13) est disposé radialement vers l'extérieur de la chemise extérieure (21) et inclut une partie de support (13s) disposée entre la paire de parties de support (12a) et au moins une partie étendue (13k, 13m) s'étendant vers l'extérieur depuis la partie de support (13s) à travers la partie de support (12a), l'un des éléments de fixation (23) est fixé sur la partie étendue (13m), l'autre élément de fixation (16) a une partie de vis mâle (16c), et le déplacement relatif de l'élément d'ajustement (18) est transmis aux parties de support (12a) par le premier élément de fixation (23) fixé sur la partie étendue (13m) et par la partie étendue (13m) ;
**caractérisé en ce que**
l'élément de tension (13) et la chemise extérieure (21) sont des parties séparées, et
l'élément de tension (13) peut être séparé en deux parties (13a, 13b), dans lequel une partie séparée (13b) à un trou de vis (13j) qui vient en prise par filetage avec la partie de vis mâle (16c) de l'autre de l'élément de fixation (16).

2. Dispositif de direction selon la revendication 1, **caractérisé en ce que** l'élément de fixation (23) fixé sur la partie étendue est un écrou (23).

3. Dispositif de direction selon la revendication 1, **caractérisé en ce que** l'élément de tension (13) est circonférentiellement continu dans un état assemblé.

4. Dispositif de direction selon l'une quelconque des revendications précédentes, **caractérisé en ce que** l'élément de tension (13) est formé par une jonction d'un seul bloc ou par prise non par filetage avec la partie de support (13s) disposée entre la paire de parties de support (12a).

5. Dispositif de direction selon la revendication 4, **caractérisé en ce que** des sections transversales des parties de montage de la partie de support (13s) et de la partie étendue (13m) ne sont pas circulaires.
